## Europäisches Patentamt

## European Patent Office

## Office européen des brevets

(19)

(11) Veröffentlichungsnummer: **0 093 911**
**B1**

(12) # EUROPÄISCHE PATENTSCHRIFT

(45) Veröffentlichungstag der Patentschrift:
08.01.86

(51) Int. Cl.⁴: **C 08 G 18/08, C 08 G 18/10**

(21) Anmeldenummer: 83103907.8

(22) Anmeldetag: 21.04.83

(54) Verfahren zur Herstellung von wässrigen Dispersionen von chemisch fixierte Carboxylat- und/oder Sulfonatgruppen aufweisenden Polyurethanen.

(30) Priorität: 04.05.82 DE 3216567

(43) Veröffentlichungstag der Anmeldung:
16.11.83 Patentblatt 83/46

(45) Bekanntmachung des Hinweises auf die Patenterteilung:
08.01.86 Patentblatt 86/2

(84) Benannte Vertragsstaaten:
BE DE FR GB IT

(56) Entgegenhaltungen:
BE - A - 673 432
DE - A - 1 595 273
FR - A - 2 099 457

(73) Patentinhaber: BAYER AG, Konzernverwaltung RP
Patentabteilung, D-5090 Leverkusen 1 Bayerwerk (DE)

(72) Erfinder: Lorenz, Otto, Prof. Dr., Kurbrunnenstrasse 22,
D-5100 Aachen (DE)
Erfinder: Rose, Gerd, Gerlachstrasse 13-15,
D-5100 Aachen (DE)

ACTORUM AG

## Beschreibung

Die vorliegende Erfindung betrifft ein neues Verfahren zur Herstellung von wässerigen Dispersionen von eingebaute Carboxylat- und/oder Sulfonatgruppen aufweisenden Polyurethanen durch Umsetzung von freie Isocyanatgruppen aufweisenden Prepolymeren mit organischen Diaminocarboxylaten und/oder organischen Diaminosulfonaten und/oder organischen Dihydroxycarboxylaten und/oder organischen Dihydroxysulfonaten in wässeriger oder organischer Phase, gegebenenfalls unter anschliessender Wasserzugabe und Entfernung von gegebenenfalls mitverwendetem Lösungsmittel, wobei man als NCO-Prepolymere solche verwendet, die praktisch frei von freien, monomeren Diisocyanaten sind.

Verfahren zur Herstellung von wässerigen Dispersionen ionisch modifizierter Polyurethane sind in grosser Anzahl bekannt geworden (vgl. z.B. D. Dieterich et al., Angew. Chem. 82, (1970), Seiten 53 ff oder D. Dieterich, Die Angew. Makromol. Chem. 98 (1981), Seiten 133 ff bzw. die in diesen Literaturstellen zitierten Veröffentlichungen). Ein besonders einfaches Verfahren zur Herstellung derartiger Dispersionen besteht darin, NCO-Prepolymere auf Basis von organischen Polyhydroxylverbindungen und monomeren Diisocyanaten in wässeriger bzw. wässerig/organischer Phase mit Diaminocarboxylaten und/oder -sulfonaten umzusetzen und gegebenenfalls vorliegendes organisches Lösungsmittel gegebenenfalls nach der Umsetzung destillativ zu entfernen (vgl. z.B. DE-AS 1 495 847 oder DE-OS 2 035 732). Bei diesen Verfahren des Standes der Technik werden als NCO-Prepolymere Umsetzungsprodukte von organischen Polyhydroxylverbindungen mit überschüssigen Mengen an monomeren Diisocyanaten eingesetzt. Diese Umsetzungsprodukte weisen, auch bei Verwendung eines nur geringen Diisocyanat-Überschusses, stets einen beträchtlichen Gehalt an freiem, nicht umgesetztem monomerem Diisocyanat auf, so dass bei der Umsetzung der Prepolymeren mit den Diaminocarboxylaten bzw. -sulfonaten neben den hochmolekularen, ionisch modifizierten Polyurethanen als Nebenprodukte durch Umsetzung der monomeren Diisocyanate mit den ionischen Kettenverlängerungsmitteln auch Polyelektrolyte mit einer hohen Konzentration an ionischen Zentren entstehen. Polyelektrolyte bewirken im übrigen auch eine meist unerwünschte Vergrösserung des Partikeldurchmessers der dispergierten Polyurethane.

Wie jetzt gefunden wurde ist es möglich, die Eigenschaften der wässerigen Polyurethandispersionen, insbesondere die mechanischen Eigenschaften der aus ihnen hergestellten Flächengebilde, wesentlich zu verbessern und auch den Feststoffgehalt der Dispersionen wesentlich zu erhöhen, wenn auf einen möglichst geringen Gehalt der Dispersionen an solchen Polyelektrolyten geachtet wird. Dies kann dadurch erreicht werden, dass man die als Aufbaukomponente einzusetzenden NCO-Prepolymeren vor ihrer weiteren Umsetzung weitgehend von monomerem Diisocyanat befreit.

Gegenstand der Erfindung ist daher ein Verfahren zur Herstellung von wässerigen Dispersionen von chemisch fixierte Carboxylat- und/oder Sulfonatgruppen aufweisenden Polyurethanen durch Umsetzung in wässeriger oder organischer Phase und gegebenenfalls anschliessender Wasserzugabe und evtl. Entfernung von gegebenenfalls mitverwendetem Lösungsmittel von

i) einen NCO-Gehalt von 1,5 bis 8 Gew.-% aufweisenden NCO-Prepolymeren auf Basis von organischen Polyhydroxylverbindungen und monomeren Diisocyanaten mit

ii) organischen Diaminocarboxylaten und/oder organischen Diaminosulfonaten und/oder organischen Dihydroxycarboxylaten und/oder organischen Dihydroxysulfonaten sowie gegebenenfalls weiteren, von Salzgruppen freien, Amino- und/oder Hydroxylgruppen tragenden Kettenverlängerungsmitteln

unter Einhaltung eines Äquivalentverhältnisses zwischen Isocyanatgruppen und Amino- und/oder Hydroxylgruppen von 1:1,2 bis 1:0,05, wobei man die Art und Mengenverhältnisse der Reaktionspartner im übrigen so bemisst, dass das entstehende Polyurethan einen Gehalt an Carboxylat- und/oder Sulfonatgruppen von 2-80 Milliäquivalenten pro 100 g aufweist, dadurch gekennzeichnet, dass man als Reaktionspartner (i) NCO-Prepolymere mit einem Gehalt an monomerem Diisocyanat von weniger als 1,2 Gew.-% verwendet.

Die beim erfindungsgemässen Verfahren als Komponente (i) einzusetzenden NCO-Prepolymeren werden nach an sich bekannten Verfahren des Standes der Technik unter Verwendung der bekannten Ausgangsmaterialien hergestellt. Geeignete organische Polyhydroxylverbindungen sind insbesondere im wesentlichen lineare Polyester- oder Polyetherpolyole eines aus dem Hydroxylgruppengehalt errechenbaren mittleren Molekulargewichts von 300-10 000, vorzugsweise 500-4000, wie sie beispielsweise in der DE-AS 1 495 847, Kolonne 2, Zeile 58 bis Kolonne 3, Zeile 19, beschrieben sind. Geeignete monomere Diisocyanate sind beispielsweise die Urethangruppenfreien Diisocyanate der in DE-AS 1 495 847, Kolonne 3, Zeilen 30-44 beispielhaft genannten Art. Besonders gut geeignet sind Hexamethylendiisocyanat, 4,4'-Diisocyanato-dicyclohexylmethan oder Isophorondiisocyanat. Die Herstellung der NCO-Prepolymeren geschieht durch Umsetzung der Einzelkomponenten unter Einhaltung eines NCO/OH-Äquivalentverhältnisses von mindestens 1,2:1, vorzugsweise 1,5:1 bis 2,5:1, bei beispielsweise 20-150° C, vorzugsweise 70-130° C. Auch bei Verwendung nur eines geringen Diisocyanat-Überschusses entstehen hierbei stets Gemische aus NCO-Prepolymeren mit nicht umgesetztem monomerem Diisocyanat. Der Gehalt an monomerem Diisocyanat liegt stets über 1,4 Gew.-%. Erfindungswesentlich ist nun, dass vor der Durchführung des erfindungsgemässen Verfahrens die so erhaltenen NCO-Prepolymeren weitgehend von monomerem Diisocyanat befreit werden. Dies kann beispielsweise durch Dünnschichtdestillation oder Extraktion erfolgen. Vorzugsweise erfolgt die Entfernung des monomeren Diisocyanats durch Dünnschichtdestillation, gegebenenfalls unter Mitverwendung eines Schleppmittels und gegebenenfalls unter Inertgasatmosphäre bei beispielsweise 80-200° C und einem Druck von 0,1 bis 2 mbar. Die Temperatur- und Druckbedingungen sind jedoch nicht wesentlich, vielmehr ist ausschliesslich darauf zu achten, dass das monomere Diisocyanat bis auf einen Restgehalt von weniger als 1,2 Gew.-%, vorzugsweise weniger als 0,9 Gew.-%, entfernt wird.

Das so erhaltene, im wesentlichen monomerenfreie und vorzugsweise keinerlei ionische Zentren aufweisende NCO-Prepolymer wird anschliessend nach den an sich bekannten Verfahren des Standes der Technik durch Umsetzung mit ionischen Kettenverlängerungsmitteln und gegebenenfalls weiteren, von Salzgruppen freien, Amino- und/oder Hydroxylgruppen tragenden Kettenverlängerern in wässeriger bzw. organischer Phase zum hochmolekularen Polyurethan bzw. Polyurethan-Polyharnstoff umgesetzt. „Wässerige Phase" bedeutet hierbei in Wasser oder in Gemischen aus Wasser mit wassermischbaren Lösungsmitteln wie z.B. Aceton; „Organische Phase" bedeutet hierbei in Lösung, beispielsweise unter Verwendung von Aceton, N-Methyl-pyrrolidon und/oder Toluol als Lösungsmittel, oder in der Schmelze.

Geeignete derartige ionische Diamine sind beispielsweise die Salze, die durch Neutralisation der in DE-AS 1 495 847, Kolonnen 4-5 unter 2. und 4. beispielhaft genannten Diaminocarbonsäuren bzw. Diaminosulfonsäuren mit den in DE-AS 1 495 847, Kolonne 5 unter 1. und 2. beispielhaft genannten Basen erhalten werden. Besonders gut geeignet sind auch die in DE-OS 2 035 732 genannten N-(ω-amino-alkan)-ω'-aminoalkansulfonsäuresalze. Geeignete ionische Diole sind beispielsweise die Sulfonatgruppen aufweisenden aliphatischen Diole gemäss DE-OS 2 446 440, wie z.B. das propoxylierte Adduct aus 2-Butendiol-1,4 und Natriumbisulfit des Molekulargewichts 425 oder Salze von Hydroxycarbonsäure wie z.B. Weinsäure oder Dimethylolpropionsäure mit anorganischen oder organischen Basen. Anstelle derartiger Dihydroxycarboxylate können auch die freien Dihydroxycarbonsäuren mit dem NCO-Prepolymeren umgesetzt werden, worauf anschliessend, nach erfolgter Umsetzung, beispielsweise während des Dispergiervorgangs eine Neutralisation der dann im Polyurethan vorliegenden Carboxylgruppen erfolgt. Zu dieser Neutralisation können beliebige Basen, vorzugsweise organische Amine, insbesondere tertiäre Amine wie z.B. Triethylamin verwendet werden. Diese Arbeitsweise unter Verwendung von freien Dihydroxycarbonsäuren unter anschliessender Neutralisation stellt ein glattes Äquivalent zu der Verwendung von Dihydroxycarboxylaten dar, da völlig analoge Endprodukte erhalten werden. Selbstverständlich können auch Gemische verschiedener ionischer Aufbaukomponente der beispielhaft genannten Art Verwendung finden, so dass beispielsweise Carboxylat- und Sulfonatgruppen aufweisende Umsetzungsprodukte erhalten werden.

Geeignete, von Salzgruppen freie, Aminogruppen tragende Kettenverlängerer, die gegebenenfalls gemeinsam mit den genannten ionischen Diaminen eingesetzt werden können, sind beispielsweise Hydrazin oder organische Polyamine, wie sie beispielsweise in DE-OS 2 651 506 als Kettenverlängerer genannt sind. Bevorzugt sind dabei Diamine wie z.B. Ethylendiamin, Isophorondiamin, oder 2- und/oder 4-Methyl-1,3-diaminocyclohexan. Anteilig können aber auch höherfunktionelle Polyamine, wie z.B. Diethylentriamin mitverwendet werden, jedoch vorzugsweise nur in solchen Mengen, dass das Mittel der Funktionalität aller Ausgangskomponenten nicht grösser als 2,2 ist. Auch Hydroxylgruppen aufweisende Kettenverlängerungsmittel wie z.B. Ethylenglykol oder 1,6-Dihydroxyhexan können mitverwendet werden. Die nichtionischen Kettenverlängerer werden, falls überhaupt, in Mengen von bis zu 80, vorzugsweise bis zu 60 Äquivalentprozent, bezogen auf die Isocyanatgruppen der Komponente (i) eingesetzt.

Die Menge der Komponente (ii), d.h. der ionischen Aufbaukomponente sowie der gegebenenfalls zusätzlich eingesetzten, von Salzgruppen freien Kettenverlängerer wird im übrigen so bemessen, dass ein Äquivalentverhältnis zwischen Isocyanatgruppen und Hydroxyl- und/oder Aminogruppen von 1:1,2 bis 1:0,05, vorzugsweise 1:0,9 bis 1:0,1, und ein Ionengruppengehalt im entstehenden Polyurethan von 2-80, vorzugsweise 2-40, insbesondere 2,5-15 Milliäquivalenten/100 g vorliegt.

Bei der Durchführung des erfindungsgemässen Verfahrens kommen die ionischen Aufbaukomponenten (ii) im Falle der Verwendung von Diaminocarboxylaten und/oder Diaminosulfonaten vorzugsweise in Form wässeriger Lösungen zum Einsatz, wobei es im Prinzip jedoch auch möglich ist, die genannten ionischen Aufbaukomponenten in einem wässerig/organischen Milieu, beispielsweise in wässerigem Aceton zu lösen. Bei Verwendung von Dihydroxycarboxylaten und/oder von Dihydroxysulfonaten als ionische Aufbaukomponenten (ii) kommen diese entweder in Substanz oder als Lösung in einem der beispielhaft genannten Lösungsmittel zum Einsatz. Die NCO-Prepolymeren kommen bei der Durchführung des erfindungsgemässen Verfahrens entweder als Schmelze, vorzugsweise jedoch in Form einer organischen, insbesondere acetonischen Lösung zum Einsatz. Zum Auflösen der ionischen Aufbaukomponenten kann im Falle der Verwendung vom Diaminocarboxylaten oder von Diaminosulfonaten die Gesamtmenge des letztendlich in der Dispersion vorliegenden Wassers oder nur ein Teil hiervon verwendet werden. Bei Verwendung derartiger aminischer Aufbaukomponenten (ii) werden die Komponenten (i) und (ii) unter Rühren vorzugsweise innerhalb des Temperaturbereichs von 20 bis 55° C miteinander vereinigt. Das gegebenenfalls mitverwendete organische Lösungsmittel kann gewünschtenfalls, falls es einen unter dem Siedepunkt von Wasser liegenden Siedepunkt aufweist, nach der Vereinigung der Komponenten (i) und (ii) bzw. nach Zugabe der gesamten Wassermenge destillativ entfernt werden. Oft ist jedoch eine destillative Entfernung des Lösungsmittels, insbesondere wenn nur geringe Mengen eingesetzt worden sind, nicht erforderlich. Nach der Vereinigung der Komponenten (i) und (ii) bilden sich spontan hochmolekulare, ionisch modifizierte Polyurethane, die in Abhängigkeit von der zunächst vorliegenden Wassermenge als Lösung oder schon als Dispersion vorliegen. Gegebenenfalls vorliegende Lösungen in vorwiegend organischem Lösungsmittel können durch Zugabe weiteren Wassers in eine wässerige Dispersion überführt werden. Die Gesamtmenge des Wassers wird im allgemeinen so bemessen, dass letztendlich Dispersionen mit einem Feststoffgehalt von 30 bis 70 Gew.-% vorliegen. Bei Verwendung von Dihydroxycarboxylaten und/oder von Dihydroxysulfonaten als Aufbaukomponente (ii) erfolgt die Umsetzung vorzugsweise in organischer Phase, d.h. entweder in organischer Lösung oder in der Schmelze bei ca. 20-150° C, vorzugsweise 40-120° C. Die Überführung der dann vorliegenden Polyurethane in eine wässerige Dispersion erfolgt in an sich bekannter Weise, gegebenenfalls nach Auflösen der Schmelze in einem Lösungsmittel der beispielhaft genannten Art, durch Vermischen der Lösung mit dem Dispergierwasser und gegebenenfalls anschliessender Entfernung des Lösungsmittels.

Die nach dem erfindungsgemässen Verfahren zugänglichen wässerigen Dispersionen bzw. die aus diesen Dispersionen hergestellten Flächengebilde zeichnen sich im Vergleich zu den entsprechenden Dispersionen gemäss Stand der Technik bzw. den daraus hergestellten Flächengebilden durch eine Reihe bemerkenswerter Vorteile aus:

1. Die erfindungsgemäss erhaltenen Dispersionen sind bei vergleichbarem Ionengehalt feinteiliger und weisen daher eine verbesserte Lagerstabilität sowie besseres Filmbildungsvermögen auf. Bei geringen Ionengehalten lassen sich Dispersionen mit Feststoffgehalten zwischen 55 und 70% herstellen.

2. Die aus den Dispersonen hergestellten Flächengebilde weisen eine geringere Wasserquellung auf.

3. Die Flächengebilde bzw. Folien weisen, wie aus den verminderten Spannungswerten bei 100 bzw. 300% Dehnung ersichtlich, eine erhöhte Elastizität auf.

Die erfindungsgemäss erhaltenen Dispersionen können für alle beliebigen Einsatzgebiete eingesetzt werden, in denen bislang wässerige Dispersionen anionisch modifizierter Polyurethane Verwendung fanden.

Die nachstehenden Beispiele dienen zur weiteren Erläuterung des erfindungsgemässen Verfahrens. Alle Prozentangaben beziehen sich, soweit nicht anderslautend vermerkt, auf Gewichtsprozente.

*Beispiel 1*

Herstellung des NCO-Prepolymers:

2021 g (1,0 Mol) eines wasserfreien Polyethers aus Tetrahydrofuran wurden in einer $N_2$-Atmosphäre mit 289,6 g (1,723 Mol) Hexamethylendiisocyanat (HDI) bei 110° C zu einem NCO-Prepolymer umgesetzt, dessen NCO-Gehalt 61,7 mmol/ 100 g (= 2,618%) betrug. Mittels Gelchromatographie wurde der Gehalt an freiem HDI mit 2,4% ermittelt.

Dünnschichten des NCO-Prepolymers:

Zur Entfernung von nicht umgesetztem HDI wurde das NCO-Prepolymer gedünnschichtet. Tabelle 1 enthält Angaben über die Verfahrensweise beim Dünnschichten. Der Gehalt an freiem HDI nach dem Dünnschichten betrug 1,1%. Die Bestimmung erfolgt wiederum gelchromatographisch.

Dispersionsbildung:

Das gedünnschichtete NCO-Prepolymer wurde in 5 Teilversuchen weiterverarbeitet, wobei jeweils 182,3 g, gelöst in 284,4 g (= 360 ml) Aceton, mit unterschiedlichen Mengen an N-(2-aminoethyl)-2-aminoethansulfonsaurem Natrium (AAS-Na) bei 45° C umgesetzt wurden. AAS-Na lag als wässerige Lösung vor, die jeweils 36 ml Wasser enthielt. Die AAS-Na-Menge betrug bei den einzelnen Versuchen: 1a) = 3,77 g (19,8 mmol); 1b) = 2,86 g (15,0 mmol); 1c) = 2,40 g (12,6 mmol); 1d) = 2,16 g (11,4 mmol) und 1e) = 1,98 g (10,5 mmol). Zur Dispergierung wurden jeweils 344 g Wasser unter Rühren bei 45° C zugesetzt, so dass nach Abdestillation des Acetons im Rotationsverdampfer Dispersionen mit einem Feststoffgehalt von ca. 35% resultierten. Der Wasserzulauf betrug 10,6 g · $min^{-1}$. In Tabelle 2 sind charakteristische Eigenschaften der Latices und der nach dem Trocknen erhaltenen Folien zusammengestellt.

*Beispiel 2*

Herstellung des NCO-Prepolymers:

Diese erfolgte wie in Beispiel 1 beschrieben.

Dünnschichten des NCO-Prepolymers:

Um eine möglichst quantitative Entfernung des nicht umgesetzten HDI zu erreichen, wurde das NCO-Prepolymer zur Herabsetzung der Viskosität mit 8 m-% n-Hexadecan als Schleppmittel versetzt. Nach dem Dünnschichten betrug der durch GPC bestimmte Anteil an freiem HDI 0,1% und der an Hexadecan 0,5%.

Dispersionsbildung:

Das gedünnschichtete Prepolymer wurde, wie in Beispiel 1 beschrieben, mit unterschiedlichen Mengen an AAS-Na umgesetzt. Die AAS-Na-Menge betrug, für 182,3 g NCO-Prepolymer, bei den einzelnen Versuchen: 2a)-2c) wie in Beispiel 1 für 1a)-1c); 2d) = 1,98 g (10,5 mmol); 2e) = 1,62 g (8,53 mmol); 2f) = 1,27 g (6,68 mmol) und 2g) = 0,92 g (4,84 mmol). Der Feststoffgehalt wurde auch bei diesen Dispersionen auf 35% eingestellt. Die für das Abdampfen des Acetons benötigte Zeit nahm mit fallender Menge an AAS-Na, d.h. steigendem Partikeldurchmesser, zu. In Tabelle 3 sind charakteristische Eigenschaften der Latices und der aus ihnen erhaltenen Folien zusammengestellt.

Aus den Tabellen 2 und 3 ist zu entnehmen, dass bei Verwendung von gedünnschichteten NCO-Prepolymeren sehr geringe Ionenkonzentrationen erforderlich sind, um stabile Dispersionen zu erhalten. Die Partikelgrössenverteilung wird durch die Herabsetzung der Ionenkonzentration nur unwesentlich verbreitert, wie aus den für $U_{80}$ angegebenen Werten zu ersehen ist. Die Wasserquellung der Folien wird mit fallender Ionenkonzentration deutlich herabgesetzt.

*Beispiel 3* (Vergleichsversuch)

Die Herstellung des NCO-Prepolymers erfolgte wie in Beispiel 1 beschrieben. 182,3 g des Prepolymers wurden ohne vorheriges Dünnschichten nach Lösen in 284,4 g (= 360 ml) Aceton mit 3,77 g (19,5 mmol) AAS-Na, gelöst in 36 ml Wasser, bei 45° C umgesetzt. Die Dispergierung erfolgte wie in Beispiel 1 beschrieben. In den Tabellen 2 und 3 sind charakteristische Eigenschaften dieser Dispersion und der aus ihr hergestellten Folien zum Vergleich aufgeführt.

Wie aus den Tabellen 2 und 3 zu entnehmen ist, enthält die Vergleichsdispersion wesentlich gröbere Partikel als die aus den gedünnschichteten Prepolymeren hergestellten Dispersionen mit gleicher Ionenkonzentration (Dispersionen 1a), 2a) und 3). Dies ergibt sich auch aus den spezifischen Oberflächen und den Teilchenzahlen pro Gramm Ionomer. Die Partikelgrössenverteilung ist um so enger, je weniger freies HDI das verwendete NCO-Prepolymer enthielt, wie die für $U_{80}$ angegebenen Werte erkennen lassen.

*Beispiel 4* (Dispersion mit hohem Feststoffgehalt) Beispiel 4 entspricht in der Verfahrensweise Beispiel 2f), jedoch wurde hier durch Abdampfen von Wasser ein Latex mit einem Feststoffgehalt von 60% erreicht, dessen Brookfield-Viskosität 300 mPa · s/23° C betrug. Der Latex erwies sich als lagerstabil und zeigte noch nach 4 Monaten bei Raumtemperatur keine Koaleszenz. Die Eigenschaften der aus dem Latex hergestellten Folien werden durch den Feststoffgehalt nicht beeinflusst.

Beispiel 4 zeigt, dass man aus gedünnschichteten NCO-Prepolymeren Dispersionen mit hohem Feststoffgehalt erhalten kann.

### Tabelle 1

Betriebsbedingungen beim Dünnschichtprozess

| | Beispiel 1 | Beispiel 2 |
|---|---|---|
| Vorbeheizung des Rohproduktes bei | 60° C | 60° C |
| Temperaturen im Verdampferteil | 118-121° C | 131-133° C |
| Druck in mbar (hPa) | 0,75 | 0,65-0,7 |
| Fördermenge in g · min$^{-1}$ | 3,4 | 4,4 |
| Verweilzeit im Verdampferteil (min) | 4-5 | 4 |
| Siedepunkt des Leichtersiedenden | ca. 95° C | ca. 100° C |
| Produktfilmdicke auf der Verdampfermantelfläche in mm[a] | 0,24 | 0,29-0,26 |
| Gasballast ($N_2$ im Gegenstrom) in mbar | 0,18 | 0,18 |
| Drehzahl des Rührers in min$^{-1}$ [b] | 1300 | 1300 |

[a] Wirksame Verdampferfläche: 630 cm²
[b] 2 Rührblätter

*Beispiel 5* (Dispersion mit hohem Feststoffgehalt)

Herstellung des NCO-Prepolymeren:

2025 g (1,0 Mol) Polypropylenglykol werden mit 289,6 g (1,73 Mol) Hexamethylendiisocyanat während 10 Stunden bei 110° C umgesetzt. Das so erhaltene Umsetzungsprodukt wies einen NCO-Gehalt von 61,7 mmol/100 g auf. Dies entspricht einem NCO-Umsatz von 100,7%, bezogen auf die vorgegebenen Hydroxylgruppen.

Durch Dünnschichten wurde der Gehalt an freiem Hexamethylendiisocyanat auf weniger als 0,1% herabgesetzt. Der NCO-Gehalt des gedünnschichteten NCO-Prepolymeren betrug 37,4 mmol/100 g.

Herstellung einer Dispersion:

100 g des NCO-Prepolymeren, gelöst in 153,3 g Aceton wurden mit 0,7 g (3,69 mmol) AAS-Na, gelöst in 33,7 mml Wasser, während 40 Minuten bei 45° C zu Reaktion gebracht. Die Dispergierung erfolgte im Anschluss hieran durch Zusatz von 153,3 g Wasser bei 45° C. Nach dem Abdestillieren eines Aceton-Wasser-Gemisches betrug der Feststoffgehalt 43,3%. Durch weiteres Abdestillieren von Wasser konnte der Feststoffgehalt auf 66,5% erhöht werden. Die Brookfield-Viskosität der 66,5%igen Dispersion betrug 380 mPa · s$^{-1}$ bei 23° C, die Ionenkonzentration 0,0366 mmol $SO_3^-$/g Feststoff.

*Beispiel 6* (Dispersion mit hohem Feststoffgehalt)

100 g des NCO-Prepolymeren gemäss Beispiel 5 wurden mit 1,645 g des propoxylierten Addukts aus 2-Butendiol-1,4 und Natriumdisulfit (Molekulargewicht = 425), das als 70%ige Lösung in Toluol vorlag, während 140 Minuten auf 110° C erhitzt. Danach betrug der NCO-Umsatz, bezogen auf die Hydroxylgruppen des Diolsulfonats 110,6%. Das Reaktionsprodukt wurde in 158 g Aceton gelöst und bei 45° C mit 186 g Wasser dispergiert. Nach dem Abdestillieren des Acetons sowie eines Teils des Wassers lag eine Dispersion mit einem Feststoffgehalt von 68,5%, einer Brookfield-Viskosität von 1500 mPa·s$^{-1}$ bei 23° C und einer Ionenkonzentration von 0,038 mmol SO$_3^-$/g Feststoff vor.

*Beispiel 7* (Dispersion mit hohem Feststoffgehalt)

100 g des NCO-Prepolymeren gemäss Beispiel 5 wurden mit 1,918 g des Triethylammoniumsalzes der Dimethylpropionsäure (50%ige Lösung in Aceton) während 400 Minuten auf 50° C und nachfolgend während 60 Minuten auf 70° C erwärmt. Nach dieser Umsetzung betrug der NCO-Umsatz 105%, bezogen auf die Hydroxygruppen des Kettenverlängerungsmittels. Nach Auflösen in 158 g Aceton erfolgte Dispergierung durch Zugabe von 186 g Wasser bei 45° C. Nach Abdestillieren des Acetons betrug der Feststoffgehalt 37,5%. Nach Zugabe von 82 ml 0,1 INaOH erfolgte Abdestillieren von Wasser und Triethylamin bis zu einem Feststoffgehalt von 55%. Die Viskosität dieser Dispersion betrug 1350 mPa·s$^{-1}$ (20° C), Ionenkonzentration 0,08 mmol COO$^-$/g Feststoff.

*Tabelle 2*

Eigenschaften der nach Beispielen 1 und 3 (Vergleich) hergestellten Dispersionen und der nach dem Trocknen erhaltenen Folien

| Beispiel | 1a) | 1b) | 1c) | 1d) | 1e) | 3 |
|---|---|---|---|---|---|---|
| Freies HDI$^a$ (%) | 1,1 | 1,1 | 1,1 | 1,1 | 1,1 | 2,4 |
| [SO$_3^-$]$^b$ (mEq/100 g) | 10,7 | 8,2 | 6,8 | 6,2 | 5,7 | 10,7 |
| Latex-Eigenschaften | | | | | | |
| Feststoff (%) | 35,1 | 35,1 | 35,1 | 35,1 | 35,1 | 35,9 |
| $\varkappa^c$ (mS·cm$^{-1}$) | 1,66 | 1,53 | 1,31 | 1,15 | 1,03 | 1,82 |
| $\eta^d$ (mPa·s) (23° C) | 110 | 69 | 19 | 13 | 17 | 69 |
| D$_T^e$ (nm) | 120 | 150 | 340 | 390 | 420 | 310 |
| H$_2$O-lösliche SO$_3^-$-Gruppen$^f$ (%) | 22 | | 19 | | 24 | 61 |
| Folien-Eigenschaften | | | | | | |
| $\delta$ 100$^g$ (N·cm$^{-2}$) | 216 | 226 | 239 | 235 | | 296 |
| $\delta$ 300$^g$ (N·cm$^{-2}$) | 327 | 373 | 398 | 353 | 241 | 544 |
| H$_2$O-Quellung w$_{H_2O}$$^h$ | 20,1 | 17,1 | 15,2 | 13,3 | 11,0 | 20,2 |

$^a$ Freies HDI im NCO-Prepolymer
$^b$ SO$_3^-$, bezogen auf Ionomer
$^c$ Leitfähigkeit des 35%igen Latex bei Raumtemperatur
$^d$ Brookfield-Viskosität des 35%igen Latex bei Raumtemperatur (23° C)
$^e$ Aus Trübungsmessungen ermittelter Partikeldurchmesser
$^f$ Bestimmt im Serum als H$^+$ nach Ausfrieren des Latex und Kationenaustausch des Serums gegen H$^+$
$^g$ Spannungswerte bei 100 bzw. 300% Dehnung, Dehnungsgeschwindigkeit 200%·min$^{-1}$
$^h$ Massenbruch an H$_2$O nach Quellung bei Raumtemperatur, Quellzeit 16 d (Tage), Folienstärke 0,4-0,5 mm

*Tabelle 3*

Eigenschaften der nach Beispielen 2 und 3 (Vergleich) hergestellten Latices und der nach dem Trocknen erhaltenen Folien

| Beispiel | 2a) | 2b) | 2c) | 2d) | 2e) | 2f) | 2g) | 3 |
|---|---|---|---|---|---|---|---|---|
| Freies HDI$^a$ (%) | 0,1 | 0,1 | 0,1 | 0,1 | 0,1 | 0,1 | 0,1 | 2,4 |
| [SO$_3^-$]$^b$ (mEq/100 g) | 10,7 | 8,6 | 6,8 | 5,7 | 4,7 | 3,7 | 2,7 | 10,7 |

| Beispiel | 2a) | 2b) | 2c) | 2d) | 2e) | 2f) | 2g) | 3 |
|---|---|---|---|---|---|---|---|---|
| Freies HDI[a] (%) | 0,1 | 0,1 | 0,1 | 0,1 | 0,1 | 0,1 | 0,1 | 2,4 |
| $[SO_3^-]$[b] (mEq/100 g) | 10,7 | 8,6 | 6,8 | 5,7 | 4,7 | 3,7 | 2,7 | 10,7 |
| Latex-Eigenschaften | | | | | | | | |
| Feststoff (%) | 35,0 | 35,0 | 35,1 | 34,9 | 34,9 | 34,9 | 35,0 | 35,9 |
| $\varkappa$[c] $(mS \cdot cm^{-1})$ | 1,35 | 1,17 | 1,07 | 0,94 | 0,77 | 0,51 | 0,46 | 1,82 |
| $\eta$[d] $(mPa \cdot s)$ | 151 | 34 | 9,4 | 8,5 | 7,7 | 9,6 | 10,2 | 69 |
| $H_2O$-lösliche $SO_3^-$-Gruppen[f] (%) | 6 | | 5 | | | | | 61 |
| $D_{10}$[i] (nm) | 34,8 | 34,4 | 129 | 226 | 272 | | | 127 |
| $D_{50}$[i] (nm) | 42,0 | 45,2 | 194 | 302 | 408 | | | 192 |
| $D_{90}$[i] (nm) | 49,6 | 56,8 | 338 | 508 | 680 | | | 250 |
| $U_{80}$ | 0,35 | 0,50 | 0,56 | 0,93 | 0,99 | | | 0,64 |
| Spezielle Oberfläche[j] $(m^2 \cdot g^{-1})$ | 131 | 123 | 30 | 1.8 | 14 | | | 30 |
| Teilchenzahl[j] $\cdot 10^{-15} \cdot g^{-1}$ | 23,6 | 18,7 | 0,28 | 0,06 | 0,03 | | | 0,26 |
| Folien-Eigenschaften | | | | | | | | |
| $\delta$ 100[g] $(N \cdot cm^{-2})$ | 155 | 174 | 179 | 181 | 194 | 229 | 281 | 296 |
| $\delta$ 300[g] $(N \cdot cm^{-2})$ | 198 | 213 | 234 | 271 | 308 | 393 | 470 | 544 |
| $H_2O$-Quellung $w_{H_2O}$[h] | 26,5 | 17,8 | 13,2 | 11,2 | 9,7 | 8,2 | 6,6 | 20,2 |

[a] Freies HDI im NCO-Prepolymer
[b] $SO_3^-$, bezogen auf Ionomer
[c] Leitfähigkeit des 35%igen Latex bei Raumtemperatur
[d] Brookfield-Viskosität des 35%igen Latex bei Raumtemperatur (23° C)
[e] Aus Trübungsmessungen ermittelter Partikeldurchmesser
[f] Bestimmt im Serum als $H^+$ nach Ausfrieren des Latex und Kationenaustausch des Serums gegen $H^+$
[g] Spannungswerte bei 100 bzw. 300% Dehnung, Dehnungsgeschwindigkeit $200\% \cdot min^{-1}$
[h] Massenbruch an $H_2O$ nach Quellung bei Raumtemperatur, Quellzeit 16 d (Tage), Folienstärke 0,4-0,5 mm
[i] Durch Ultrazentrifugation ermittelte Teilchendurchmesser, bei denen 10, 50 bzw. 90% der Masse erfasst sind; $U_{80} = (D_{90}-D_{10})/D_{50}$
[j] Aus der Partikelgrössenverteilung berechnete Werte
[k] Dispersion 2f) und 2g) zeigten Koaleszenz nach ca. 70 d (Tagen) bei Raumtemperatur

## Patentansprüche

1. Verfahren zur Herstellung von wässerigen Dispersionen von chemisch fixierte Carboxylat- und/oder Sulfonatgruppen aufweisenden Polyurethanen durch Umsetzung in wässeriger oder organischer Phase und gegebenenfalls anschliessender Wasserzugabe und evtl. Entfernung von gegebenenfalls mitverwendetem Lösungsmittel von

i) einen NCO-Gehalt von 1,5 bis 8 Gew.-% aufweisenden NCO-Prepolymeren auf Basis von organischen Polyhydroxylverbindungen und monomeren Diisocyanaten mit

ii) organischen Diaminocarboxylaten und/oder organischen Diaminosulfonaten und/oder organischen Dihydroxycarboxylaten und/oder organischen Dihydroxysulfonaten sowie gegebenenfalls weiteren, von Salzgruppen freien, Amino- und/oder Hydroxylgruppen tragenden Kettenverlängerungsmitteln

unter Einhaltung eines Äquivalentverhältnisses zwischen Isocyanatgruppen und/oder Hydroxylgruppen von 1:1,2 bis 1:0,05, wobei man die Art und Mengenverhältnisse der Reaktionspartner im übrigen so bemisst, dass das entstehende Polyurethan einen Gehalt an Carboxylat- und/oder Sulfonatgruppen von 2-80 Milliäquivalenten pro 100 g aufweist, dadurch gekennzeichnet, dass man als Reaktionspartner (i) NCO-Prepolymere mit einem Gehalt an monomerem Diisocyanat von weniger als 1,2 Gew.-% verwendet.

2. Verfahren gemäss Anspruch 1, dadurch gekennzeichnet, dass man als Reaktionspartner (i) NCO-Prepolymere mit einem Gehalt an monomerem Diisocyanat von weniger als 0,9 Gew.-% verwendet.

3. Verfahren gemäss Anspruch 1 und 2, dadurch gekennzeichnet, dass man Art und Menge der Aufbaukomponenten (i) und (ii) so wählt, dass das Polyurethan einen Carboxylat- und/oder Sulfonatgruppengehalt von 2,5-15 Milliäquivalenten/100 g aufweist.

## Claims

1. Process for the preparation of aqueous dispersions of polyurethanes containing chemically fixed carboxylate and/or sulphonate groups by reacting

i) NCO prepolymers based on organic polyhydroxyl compounds and monomeric diisocyanates and having an NCO content of 1.5 to 8% by weight with

ii) organic diaminocarboxylates and/or organic diaminosulphonates and/or organic dihydroxycarboxylates and/or organic dihydroxysulphonates and optionally other chain-lengthening agents which carry amino and/or hydroxyl groups and are free from salt groups,

in the aqueous or organic phase and optionally with the subsequent addition of water and possible removal of any solvent used, using an equivalent ratio between isocyanate groups and/or hydroxyl groups of 1:1.2 to 1:0.05, the nature and quantitative proportions of the reactants being otherwise chosen so that the resulting polyurethane has a content of carboxylate and/or sulphonate groups of 2-80 milliequivalents per 100 g, characterized in that NCO prepolymers having a content of monomeric diisocyanate of less than 1.2% by weight are used as reactant (i).

2. Process according to Claim 1, characterized in that NCO prepolymers having a content of monomeric diisocyanate of less than 0.9% by weight are used as reactant (i).

3. Process according to Claim 1 and 2, characterized in that the nature and quantity of the starting components (i) and (ii) are chosen so that the polyurethane has a carboxylate and/or sulphonate group content of 2.5-15 milliequivalents/100 g.

**Revendications**

1. Procédé de préparation de dispersions aqueuses de polyuréthannes comportant des groupes carboxylate et/ou sulfonate fixés chimiquement en faisant réagir, en phase aqueuse ou organique et éventuellement avec addition ultérieure d'eau et éventuellement l'élimination du solvant éventuellement utilisé conjointement:

i) un prépolymère de NCO ayant une teneur en NCO de 1,5 à 8% en poids, à base de composés polyhydroxy organiques et de diisocyanates monomères, avec

ii) des diaminocarboxylates organiques et/ou des diaminosulfonates organiques et/ou des dihydroxycarboxylates organiques et/ou des dihydroxysulfonates organiques, ainsi qu'éventuellement avec d'autres agents d'allongement de chaîne exempts de groupes salins et comportant des groupes amino et/ou des groupes hydroxy, tout en maintenant, entre les groupes isocyanate et les groupes amino et/ou les groupes hydroxy, un rapport équivalent de 1:1,2 à 1:0,05, la nature et les rapports quantitatifs des partenaires réactionnels étant par ailleurs conçus de telle sorte que le polyuréthanne formé ait une teneur en groupes carboxylate et/ou en groupes sulfonate de 2-80 milliéquivalents par 100 g, caractérisé en ce que, comme partenaire réactionnel (i), on utilise des prépolymères de NCO ayant une teneur en diisocyanate monomère de moins de 1,2% en poids.

2. Procédé selon la revendication 1, caractérisé en ce que, comme partenaire réactionnel (i), on utilise des prépolymères de NCO ayant une teneur en diisocyanate monomère inférieure à 0,9% en poids.

3. Procédé selon les revendications 1 et 2, caractérisé en ce qu'on choisit la nature et la quantité des composants structuraux (i) et (ii) de telle sorte que le polyuréthanne ait une teneur en groupes carboxylate et/ou en groupes sulfonate de 2,5-15 milliéquivalents/100 g.